Europäisches Patentamt

**European Patent Office**

**Office européen des brevets**

(11) Veröffentlichungsnummer: **0 205 919**
**B1**

(12) **EUROPÄISCHE PATENTSCHRIFT**

(45) Veröffentlichungstag der Patentschrift:
03.05.89

(21) Anmeldenummer: 86106825.2

(22) Anmeldetag: 20.05.86

(51) Int. Cl.⁴: **H 04 M 3/36,** H 04 Q 11/04,
H 04 Q 3/545

(54) Schaltungsanordnung für Fernmeldevermittlungsanlagen, insbesondere Fernsprechvermittlungsanlagen, mit informationsverarbeitenden zentralen Schaltwerken und diesen Informationsverarbeitungsaufträge zuführenden teilzentralen Schalteinrichtungen.

(30) Priorität: 25.06.85 DE 3522721

(43) Veröffentlichungstag der Anmeldung:
30.12.86 Patentblatt 86/52

(45) Bekanntmachung des Hinweises auf die Patenterteilung:
03.05.89 Patentblatt 89/18

(84) Benannte Vertragsstaaten:
AT BE CH DE FR GB IT LI NL SE

(56) Entgegenhaltungen:
EP-A- 0 171 784
EP-A- 0 176 764
DE-A- 3 328 575
DE-A- 3 435 497
FR-A- 2 402 904

NTZ ARCHIV, Band 3, Nr. 5, Mai 1981, Seiten 121-127,
Berlin, DE; S. HENTSCHKE: "Predictive processor
overload control strategies for SPC switching systems"

(73) Patentinhaber: Siemens Aktiengesellschaft Berlin und
München, Wittelsbacherplatz 2, D-8000 München 2 (DE)

(72) Erfinder: Wegmann, Gerhard, Herterichstrasse 32,
D-8000 München 71 (DE)

**Beschreibung**

Die Erfindung betrifft eine Schaltungsanordnung für Fernmeldevermittlungsanlagen, insbesondere Fernsprechvermittlungsanlagen, mit informationsverarbeitenden zentralen Schaltwerken und diesen laufend Reihen von Informationsverarbeitungsaufträgen zuführenden teilzentralen Schalteinrichtungen, wobei insbesondere der erste Informationsverarbeitungsauftrag jeder Reihe aus einem Initialschaltkennzeichen besteht, und mit in jenen jeweils einen Teil der Reihen von Informationsverarbeitungsaufträgen nach Maßgabe einer einstellbaren Abweisrate zurückhaltenden, insbesondere zurückweisenden Abweiseinrichtungen, die jeweils auf eine maßgebende Abweisrate mittels Abweisdaten einstellbar sind, die in einem Schaltwerk aus laufend gewonnenen Initialschaltkennzeichen-Zählergebnissen und/oder Belastungsmeßergebnissen gebildet und an die Schalteinrichtungen nur übertragen werden, wenn die Anzahl der dem Schaltwerk zugeführten Informationsverarbeitungsaufträge, insbesondere Initialschaltkennzeichen, einen Schwellenwert überschreitet, und deren Bildung und/oder Übertragung an die teilzentralen Schalteinrichtungen und/oder Wirksamkeit in ihren Abweiseinrichtungen wieder beendet bzw. herabgesetzt und dann beendet wird, wenn, insbesondere nachdem, die genannte Anzahl wieder auf den Schwellenwert absinkt oder ihn unterschreitet.

Eine Schaltungsanordnung dieser Art ist bereits durch die deutsche Offenlegungsschrift 33 28 571 (EP-A-1 34 009) bekannt. Darin ist eine Belastungsmeßeinrichtung beschrieben, die den Ist-Wert der laufenden Belastung eines zentralen Prozessors kontinuierlich festzustellen ermöglicht. Dieser Wert wird einem in dem Prozessor eintreffende Initialschaltkennzeichen erfassenden Zähler zugeführt. Ein Initialschaltkennzeichen ist bekanntlich immer ein erstes von jeweils einer Reihe von Schaltkennzeichen, wobei eine Reihe eine Folge von zusammengehörenden Schaltkennzeichen umfaßt; dies können zum Beispiel jeweils sämtliche Schaltkennzeichen sein, die zu je einer Verbindungsherstellung gehören, also Belegungskennzeichen (auch als «Anrufsignal» bezeichnet), Wahlinformationen (Ziffern einer mehrstelligen Rufnummer), Wahlendekennzeichen, Meldekennzeichen, Gebührenzählinformationen, Endekennzeichen und dergleichen. Alle diese Schaltkennzeichen werden in den genannten Schalteinrichtungen erfaßt und zu dem zentralen Prozessor übertragen und stellen für diesen Informationsverarbeitungsaufträge dar. Da sie pro Verbindung nacheinander und mit zum Teil größeren zeitlichen Abständen voneinander eintreffen, gelangen sie ineinander zeitlich unsystematisch verschachtelt zum zentralen Prozessor.

Für einen zentralen Prozessor bestehen unter anderem zwei grundlegende Forderungen. Er soll möglichst gut ausgelastet sein; das heißt, er soll von den insgesamt anfallenden Informationsverarbeitungsaufträgen so viele wie möglich - möglichst alle - zur Durchführung bringen. Er muß aber auch vor einer Überlastung geschützt werden, damit die in ihm ablaufenden Informationsverarbeitungsprozesse, die bereits von ihm begonnen wurden, zeitgerecht erfolgen können und ungestört abgewickelt werden (zum Beispiel muß auch eine Überfüllung einer sogenannten Eingabeliste verhindert werden); dafür muß gegebenenfalls die dem zentralen Prozessor zugeführte Belastung so begrenzt werden, daß einige Reihen von Informationsverarbeitungsaufträgen insgesamt abgewiesen werden, damit die übrigen Reihen von Informationsverarbeitungsaufträgen, also immer reihenweise zusammengehörende, z.B. verbindungsindividuell zusammengehörige Informationsverarbeitungsaufträge, vollständig, zeitgerecht und ungestört ausgeführt werden können. Diese beiden Forderungen sind gegenläufig. Die Auslastung des zentralen Prozessors, also seine praktische Ausnutzung, soll so hoch wie möglich sein; dabei sollen jedoch Überlastungen mit möglichst hoher Sicherheit vermieden werden. Die Erfüllung dieser Forderung wird durch die zufallsbedingt unsystematischen, immer wieder auftretenden steten Schwankungen der Belastung des zentralen Prozessors erschwert. Das Belastungsverhalten kann außer einer deutlich und stetigen, steigenden oder fallenden Tendenz, die regelungstechnisch hoch relativ leicht beherrschbar wäre, eine sprunghaft ansteigende Tendenz, eine sprunghaft nur für relativ kurze Zeit ansteigende Tendenz (Belastungsspitzen), eine schleichend ansteigende Tendenz und dergleichen aufweisen.

Um diese Vielfalt von Belastungsverhaltensweisen zu beherrschen, sieht die eingangs angegebene Schaltungsanordnung unter anderem einen Zähler vor, der von den beim zentralen Prozessor eingehenden Informationsverarbeitungsaufträgen nur die Initialschaltkennzeichen in Zeitabschnitten erfaßt. Da jedes derselben immer den Anfang einer Reihe von jeweils erst in den nächsten Sekunden nacheinander eintreffenden Informationsverarbeitungsaufträgen (nachfolge-Schaltkennzeichen) darstellt, gibt das Verhalten des Anfallens von Initialschaltkennzeichen immer das Verhalten der erst in den nächsten Sekunden auf den zentralen Prozessor zu kommenden Informationsverarbeitungs-Belastung gleichsam in einer Vorschau an. Hierauf kann mit anhand der eingangs angegebenen Schaltungsanordnung ebenfalls beschriebenen Abweisungsmaßnahmen, die mittels des zentralen Prozessors (zentrales Schaltwerk) sowie der Gruppenprozessoren (dezentrale Schalteinrichtungen) ausgeführt werden, in vorteilhafter Weise relativ frühzeitig durch eine Abwehr von Überlast mittels Abweisungsvorgängen Einfluß genommen werden.

Zum Vergleich der im zentralen Prozessor in der beschriebenen Weise bereits in gewissem Maße sogar vorhersehbaren Tendenz der Belastungsentwicklung mit der momentanen Ist-Belastung des zentralen Prozessors gehört zu der Schaltungsanordnung, die in der genannten Offenlegungsschrift beschrieben ist, eine Belastungsmeßeinrichtung, mit der ein Abweichen der Momentanbelastung von einem dem 100%-Wert nahekommenden Soll-Wert (zum Beispiel 95%) gemessen wird. Liegt ein solches Abweichen vor, so gibt die Belastungsmeßeinrichtung bei zu niedriger Belastung ein Steigerungssignal und bei zu hoher Belastung ein Minderungssignal an den Zähler ab, wodurch ein in ihm gespeicherter Vergleichswert (Regelnormal) jeweils etwas erhöht bzw. herabgesetzt wird. Dieser Vergleichswert gibt also die Anzahl von Initialschaltkennzeichen pro Zeiteinheit, zum Beispiel pro Sekunde, an, die zusammen mit den in der angegebenen Weise zugehörigen Nachfolgeschaltkennzeichen (wie ausgeführt, bestehe eine Reihe von verbindungsindividuellen Informationsverarbeitungsaufträgen zum Beispiel immer aus einem Initialschaltkennzeichen und einer Anzahl von Nachfolgeschaltkennzeichen) eine Belastung des zentralen Prozessors in der vorgesehenen Höhe von zum Beispiel 95 % unter den jeweils augenblicklichen Belastbarkeitsvoraussetzungen zur Folge haben. Durch die angegebene Erhöhung bzw. Herabsetzung des Vergleichswertes wird dem laufenden Vergleich der Initialschaltkennzeichen mit einem Vergleichswert ein stets aktualisierter Vergleichswert zugrundegelegt. Dessen Schwankungen, resultierend aus den Schwankungen der Belastbarkeit des Prozessors, sind dadurch bedingt, daß sich die Zusammensetzung von Informationsverarbeitungsvorgängen verschiedener Art während des laufenden Betriebes eines zentralen Prozessors im Tageszyklus und/oder im Wochenzyklus und/oder auch im Jahreszyklus verschieben kann. So kann es zum Beispiel unter der Voraussetzung, daß der zentrale Prozessor, der der einer Fernsprechvermittlungsanlage ist, sein, daß zu bestimmten Tageszeiten überwiegend Ortsverbindungen herzustellen sind, während zu bestimmten anderen Tageszeiten überwiegend Fernverbindungen herzustellen sind. Entsprechendes kann auch bezüglich verschiedener Wochentage (Werktage bzw. Sonn- und Feiertage) zu beobachten sein. Ferner kann es sein, daß zu bestimmten Tageszeiten oder an bestimmten Tagen mehr Kurzzeitgespräche stattfinden und zu anderen Tageszeiten bzw. an anderen Tagen mehr Langzeitgespräche. Ferner kann es sein, daß zu bestimmten Tageszeiten mehr Sonderdienste in Anspruch genommen werden, als zu anderen Tageszeiten. Auch kann es sein, daß zu bestimmten Tageszeiten der Anteil von vorzeitig abgebrochenen Verbindungsherstellungsvorgängen größer ist als zu bestimmten anderen Tageszeiten. Entsprechendes gilt immer auch bezüglich verschiedener Tage (Werktage bzw. Sonn- und Feiertage). Unterschiede können sich auch ergeben, wenn das Netz bei Nennlast, Hochlast oder gar bei Überlast betrieben wird, wodurch sich insbesondere die Anzahl der unvollständigen Verbindungen erhöht. Folglich ist die Belastbarkeit (Anzahl der verarbeitbaren Folgen von Informationsverarbeitungsaufträgen) eines zentralen Prozessors nicht konstant.

In den beschriebenen Zusammenhängen ist der auf einen Anstieg der Belastung folgende Beginn von Abweisungsvorgängen der kritische Punkt. Die beschriebenen Einrichtungen müssen empfindlich genug reagieren, damit in der Überlastsituation eine möglichst präzise Regelung der Abweisrate möglich ist. Diese Empfindlichkeit und Präzision kann aber in Zeiträumen niedrigerer Prozessorbelastung, in denen Abweisungen überhaupt nicht nötig, vielmehr sogar ungewollt sind, auch in nachteiliger Weise zu nutzlosen, ja schädlichen Abweisungsvorgängen führen. Zufallsbedingte kurzzeitige und deshalb noch völlig ungefährliche Belastungsspitzen könnten zu einer von Abweisungen führen, die tatsächlich überhaupt noch nicht nötig gewesen wären. Um dies zu vermeiden, ist in einer Schaltungsanordnung gemäß der genannten Offenlegungsschrift vorgesehen, die Bildung von Abweisungsdaten nach einer Lastabwehrphase zu beenden, wenn die Abweisrate für die Dauer einer Karenzzeit auf dem Wert Null geblieben ist. Zur Initialisierung der Überlastabwehr ist ein die eintreffenden Initialschaltkennzeichen betreffender besonderer Schwellenwert vorgesehen; erreicht die Anzahl der eintreffenden Initialschaltkennzeichen in einer festgelegten Zeiteinheit diesen Schwellenwert, so wird dadurch die Bildung und Übertragung von Abweisdaten in dem bzw. von dem zentralen Prozessor eingeleitet.

Bei der durch die genannte Offenlegungsschrift bekannten Schaltungsanordnung ist dieser Schwellenwert zur Vermeidung einer ungewollten Initialisierung der Abweisvorgänge höher angesetzt als der durchschnittliche Wert der in dem genannten Zähler während einer Lastregulierphase wirksame Vergleichswert (Regelnormal). Er ist im bekannten Falle konstant. Wird er zu hoch eingestellt, so kann dies zur Folge haben, daß eine Überlastabwehr zu spät einsetzt; wird er dagegen zu niedrig eingestellt, so kann das zur Folge haben, daß eine Überlastabwehr zu früh einsetzt.

Für die Erfindung besteht die Aufgabe, für ein optimales Einsetzen der Überlastabwehr, also zum Start einer Lastregulierphase geeignete Vorkehrungen zu treffen, die dieses Einsetzen möglichst gut an die gegebenen Betriebsverhältnisse anpassen, also zu frühzeitige Abweisungsvorgänge vermeiden, wiederum aber Folgen von nicht rechtzeitig abgewehrter Prozessor-Überbelastung auszuschließen.

Die Erfindung löst die gestellte Aufgabe dadurch, daß der für die Initialisierung der Übertragung der Abweisdaten maßgebende Schwellenwert mittels jeweils in einem Zeitraum zwischen Absinken der Abweisrate auf den Wert Null und erneuter Überschreitung dieses Schwellenwertes, also in Phasen des Ruhens der Abweisungsvorgänge, gewonnener Belastbarkeits-Meßergebnisse laufend justiert wird, und daß zur laufend wiederholten Gewinnung solcher Belastbarkeits-Meßergebnisse innerhalb eines jeden derartigen Zeitraumes einerseits Meßzeitintervalle festgelegt sind, in denen jeweils die Anzahl von pro Meßzeitintervall eingetroffenen Informationsverarbeitungsaufträgen, insbesondere nur der Initialschaltkennzeichen, ermittelt wird, und die zum Ausgleich von kurzzeitigen diesbezüglichen Schwankungen ausreichend groß bemessen sind, um den verbleibenden Meßfehler genügend klein zu halten, und andererseits jeweils die ermittelte Anzahl von pro Meßzeitintervall eingetroffenen Informationsverarbeitungsaufträgen, insbesondere nur der Initialschaltkennzeichen, nach Maßgabe des Verhältnisses einer in diesem Meßzeitintervall maximal zulässigen Verkehrsbelastung zu der in diesem Meßzeitintervall aus den eintreffenden Informationsverarbeitungsaufträgen resultierenden tatsächlichen Verkehrsbelastung erhöht und zur laufenden Justierung des Schwellenwertes verwendet wird.

Durch das Konferenzpapier vom 9. International Telegrafic Congress (ITC), Okt. 1979 in Torremolinos/Span. (Verfasser Somoza/Guerrero 1 - 7, Paper No. 536; vgl. auch Electrical Communication, Volume 55, No. 1./1980, Seite 37-45 = Elektrisches Nachrichtenwesen, Band 55, No. 1/1980, Seite 37 bis 45; ferner «IEEE Transactions on Communications», Sept. 73, Seite 1027 ff.) ist es bereits bekannt, in einem zentralen Prozessor einer Fernsprechvermittlungsanlage ununterbrochen eine Belastungsmessung durchzuführen, also sowohl in Zeiträumen eines Überangebotes von Informationsverarbeitungsaufträgen als auch in Zeiträumen, in denen ein solches Überangebot nicht vorliegt. Das Ergebnis dieser in Meßzeitintervallen laufend wiederholten Belastungsmessung wird unmittelbar zur Begrenzung der Anzahl von eingehenden Neubelegungen bei eintretender Überlast verwendet. Demgegenüber geht die Erfindung davon aus, daß die in einem zentralen Schaltwerk erfaßte Belastungssituation auch dort bewertet und im Bedarfsfall als Drosselungsanweisung (Abweisdaten) an die dezentralen Schalteinrichtungen gemeldet wird, welche dann entsprechende Abweisungsmaßnahmen treffen. Dadurch kann eine Drosselung der Belastung durch Abweisung eines Teiles eingehender Neubelegungen sehr frühzeitig und bezüglich der verschiedenen Schalteinrichtungen sehr gleichmäßig verteilt, also mit optimaler Wirksamkeit bewerkstelligt werden.

Damit die Abweisungsmaßnahmen aber nur zum Tragen kommen, wenn dies wirklich erforderlich ist, also nicht auch dann, wenn nur vorübergehend eine geringfügige Überlast oder eine größere Überlast nur sehr kurzzeitig auftritt, geht die Erfindung u.a. auch davon aus, daß die Abweisdaten vom zentralen Schaltwerk an die dezentralen Schalteinrichtungen nur übertragen werden, wenn die Anzahl an Neubelegungen pro Beobachtungsintervall einen Schwellenwert überschritten hat. Diese Übertragung der Abweisdaten und damit die Drosselung eingehender Neubelegungen wird wieder beendet, wenn aufgrund eines Zurückgehes der Anzahl an Neubelegungen unter den Wert des Regelnormals die Abweisungsmaßnahmen wieder aufgehört haben.

Der Schwellenwert ist ein längerfristig gemittelter Durchschnittswert, im eingangs genannten bekannten Fall ein Konstantwert. Dagegen ist dieser Durchschnittswert erfindungsgemäß nicht ein Konstantwert, sondern er wird laufend nachjustiert. Die laufend gewonnenen Meßergebnisse (im zuletzt genannten bekannten Falle sind dies Belastungs-Meßergebnisse und werden direkt zur Drosselung von im zentralen Schaltwerk eingehenden Neubelegungen verwendet) sind erfindungsgemäß Belastbarkeits-Meßergebnisse und werden zur laufenden Nachjustierung des Schwellenwertes verwendet. Da diese Ergebnisse nicht direkt zur Drosselung sondern zur Nachjustierung des Schwellenwertes verwendet werden, können die für ihre Gewinnung festgelegten Meßzeitintervalle so groß gewählt werden, daß dadurch der verbleibende Meßfehler entsprechend klein gehalten werden kann. Die Belastbarkeitsmessung unterscheidet sich von einer Belastungsmessung dadurch, daß auch bei Unterbelastung ermittelt wird, welche Anzahl von pro Zeiteinheit anfallenden Informationsverarbeitungsaufträgen bzw. Initialschaltkennzeichen zu welcher Schaltwerks-Belastung führt, und daß unter Zugrundelegung einer 100%igen Schaltwerks-Belastung ermittelt wird, welche Anzahl von Informationsverarbeitungsaufträgen bzw. Initialschaltkennzeichen pro Zeiteinheit maximal akzeptiert werden könnte. Die Nachjustierung des Schwellenwertes erfolgt erfindungsgemäß also auf diese Weise. (Anzahl Neubelegungen und Belastung.) Bei sehr kleiner gemessener Belastung wird die Nachjustierung jedoch ausgesetzt, weil hierbei ein Meßfehler auftreten würde, der relativ groß — zu groß — werden würde.

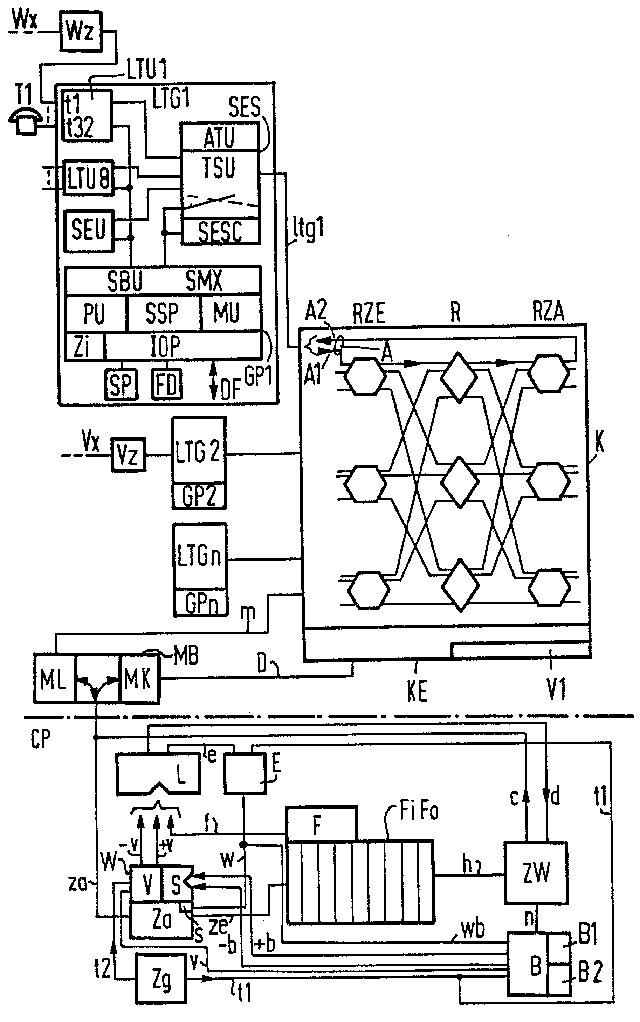

In der Zeichnung ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäß arbeitenden rechnergesteuerten Fernsprechvermittlungsanlage ein. Erst weiter unten werden die erfindungsgemäßen Besonderheiten dieser Vermittlungsanlage erläutert.

Ein in drei Koppelstufen RZE, R und RZA aufgebautes Koppelfeld weist eingangsseitig eine große Anzahl von Koppelfeldanschlüssen auf, von denen einer dargestellt und mit A bezeichnet ist. Das Koppelfeld besteht aus mehreren Koppelfeldteilen. Jeder der Koppelfeldanschlüsse umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung A1 und eine Zeitmultiplexleitung A2. Für jede dieser beiden Zeitmulitplexleitungen ist die jeweilige Signalübertragungsrichtung durch entsprechende Pfeile angedeutet.

Die Koppelvielfache der ersten Koppelstufe RZE sind kombinierte Zeitlagen-Raumlagen-Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmulitplex-Zwischenleitungen. Ebenso sind die Koppelfeldanschlüsse zeitmultiplexer Art.

An die Koppelfeldanschlüsse, zum Beispiel A des Koppelfeldteiles K, sind über für jeweils beide Nachrichtenübertragungsrichtungen ausgelegte Zeitmultiplexleitungen, zum Beispiel die Zeitmultiplexleitung ltg1, Anschlußgruppen, zum Beispiel die Anschlußgruppe LTG1 (Line Trunk Group), einzeln angeschlossen. Eine solche Anschlußgruppe ist eingangsseitig mit Teilnehmerleitungen (analog und/oder digital), Analog-Verbindungsleitungen und mit PCM-Verbindungsleitungen (alternativ sowie auch in Kombination) beschaltbar. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktion erforderlichen Einrichtungen enthalten (vgl. NTZ Bd. 33/1980, Heft 10, Seiten 646 bis 652, und 1978 International Zurich Seminar on Digital Communications, Proceedings IEE Catalogue, Nr 78 CH 1325-0 ASST, Seiten B2-1, A4.1, auch die deutschen Patentanmeldung P 31 00 811.9/VPA 81 P 6201; P 31 04 002.0/VPA 81 P 6203 und P 31 06 903.7/VPA 81 P 6209).

In der Zeichnung ist unter anderem die Anschlußgruppe LTG1 gezeigt. Deren Aufbau und Arbeitsweise sind ausführlich in der DE-A-28 26 113 ab Seite 6 unten beschrieben. Ferner ist auf das Beiheft zum 4. Jahrgang (1981) der Zeitschrift «telcom report» und auf das USA-Patent 4 564 725 (EP-4-121 237) hinzuweisen. Die weiteren Erläuterungen setzen diese Beschreibung als bekannt voraus und beschränken sich auf die im vorliegenden Falle besonders wesentlichen Zusammenhänge.

Ein zentrales Steuerwerk CP dient unter anderem zur Herstellung der über das Koppelfeld aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenden Koppelvielfache und Zwischenleitungen, sowie die darin jeweils belegten Kanäle. Diese Vermittlungsdaten werden mit Hilfe des Zentralsteuerwerkes, das also u.a. auch die Funktion einer Wegsucheinrichtung nebst Belegungsspeicher ausübt, erarbeitet und zur Koppelfeldeinstelleinrichtung KE des Koppelfeldes übertragen. Der die Vermittlungsdaten übertragende Datenfluß vom Zentralsteuerwerk CP zur Koppelfeldeinstelleinrichtung KE verläuft über eine mit dem Zentralsteuerwerk über eine zentrale Datenleitung D verbundene Puffereinrichtung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist zum Beispiel in der DE-B-15 37 849 (VPA 67/3047) ausführlich beschrieben.

Außer dem zentralen Steuerwerk CP ist eine größere Anzahl von dezentralen Steuereinrichtungen GP1 bis GPn dargestellt, die jeweils den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber können der bereits angegebenen DE-A-28 26 113 entnommen werden.

Die dezentralen Steuereinrichtungen GP1 bis GPn stehen mit dem zentralen Steuerwerk CP über Datenkanäle in Verbindung, die einzeln pro dezentrale Steuereinrichtung über das Koppelfeld (K) bis zur Puffereinrichtung MB durchgeschaltet sind. Von dieser Puffereinrichtung, und zwar von ihrem Datenkopf ML, führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlußgruppen LTG1 bis LTGn. Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfaßt. Die Zeitmultiplexeinrichtung m ist also an einen Koppelfeldanschluß wie den mit A bezeichneten angeschaltet.

Jede Datenverbindung zwischen dem Datenkopf einer Puffereinrichtung und einer jeden der Anschlußgruppen, zum Beispiel der Anschlußgruppe LTG1, umfaßt einen Kanal zur Übertragung von Daten von der Puffereinrichtung zur betreffenden Anschlußgruppe und einen weiteren Kanal zur Übertragung von Daten in der umgekehrten Richtung. Diese beiden Datenkanäle führen zu und von der der betreffenden Anschlußgruppe individuell zugeordneten dezentralen Steuereinrichtung.

Die Herstellung und die Aufrechterhaltung der erläuterten Datenverbindungen, die als semipermanente Verbindungen bezeichnet werden, über das Koppelfeld erfolgt mit Hilfe der Koppelfeldeinstelleinrichtung KE in der gleichen Weise wie die Herstellung und die Aufrechterhaltung von Nachrichtenverbindungen, zum Beispiel Fernsprechverbindungen. Hierzu sind in an sich bekannter Weise den Koppelvielfachen des Koppelfeldes K Haltespeicher zugeordnet, in die die jeweils ein Koppelvielfach betreffenden Vermittlungsdaten eingespeichert werden. Mit Hilfe dieser Haltespeicher wird bewerkstelligt, daß in den jeweiligen Zeitlagen die erforderlichen Durchschaltungen zur Verfügung stehen, bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u.a. ein Datenkopf MK, der der Puffereinrichtung MB zugeordnet ist. Der Vollständigkeit halber sei an dieser Stelle hinzugefügt, daß mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines größeren Koppelfeldes zugeordnet sein. Es ist auch möglich, je eine Koppelfeldeinstelleinrichtung pro Koppelfeldstufe vorzusehen.

Da die weiter oben beschriebenen Datenverbindungen zwischen der Puffereinrichtung MB über die Zeitmultiplexleitung m zu jeder der Anschlußgruppen LTG1 bis LTGn mit Hilfe des Koppelfeldes K durchgeschaltet sein müssen, bevor der Aufbau von Nachrichtenverbindungen, zum Beispiel Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, daß die Koppelfeldeinstelleinrichtung KE außerdem in einem ihr zugeordneten Speicher V1 Einstelldaten, d.h. also die Vermittlungsdaten, für die Datenkanäle gespeichert enthält. Diese Vermittlungsdaten brauchen also bei einem Neuaufbau der Datenverbindung nicht jeweils vom zentralen Steuerwerk CP neu erarbeitet zu werden und nicht über die Puffereinrichtung MB erneut übertragen zu werden. Sind die zwischen der Puffereinrichtung MB und den Anschlußgruppen LTG1 bis LTGn, d.h. ihren dezentralen Steuereinrichtungen GP1 bis GPn, erforderlichen Datenverbindungen über das Koppelfeld K neu herzustellen, so gibt das zentrale Steuerwerk CP lediglich einen entsprechenden Befehl an die Puffereinrichtung MB ab, den sie an die Koppelfeldeinstelleinrichtung KE weitergibt, und aufgrund deren diese die in ihrem Speicher V1 gespeicherten Vermittlungsdaten entnimmt, um in an sich bekannter Weise die erforderlichen Vermittlungsvorgänge einzeln nacheinander auszuführen.

Wie in der bereits genannten DE-OS 28 26 1 13 erläutert ist, werden über den Zeitkanalkoppler TSU der Anschlußgruppe LTG1 außer Nachrichtenverbindungen von und zu Teilnehmerstellen sowie Verbindungsleitungen auch die bereits erwähnten Datenverbindungen zwischen den den Anschlußgruppen, zum Beispiel LTG1, zugeordneten dezentralen Steuereinrichtungen, zum Beispiel GP, einerseits und dem zentralen Steuerwerk CP andererseits hergestellt. Diese Datenverbindungen verlaufen, wie bereits dargelegt, weiterhin über das Koppelfeld K und die Zeitmultiplexleitung m.

Wie bereits ausgeführt wurde, sind die Gruppensteuerwerke GP1 bis GPn dezentrale oder teilzentrale Steuereinrichtungen im Vergleich zum zentralen Steuerwerk CP. Insgesamt werden diese teilzentralen Steuerwerke und das zentrale Steuerwerk auch als Schaltwerke bezeichnet. Die Gruppensteuerwerke und das zentrale Steuerwerk weisen eine hinsichtlich der Informationskapazität begrenzte Leistungsfähigkeit auf. Ein besonderes Problem stellt die Leistungsfähigkeit des zentralen Steuerwerkes dar.

Wie ebenfalls bereits angedeutet wurde, ist außer dem zentralen Koppelfeld K eine Anzahl von Anschlußgruppen LTG1 bis LTGn vorgesehen. Jede dieser Anschlußgruppen ist je über eine PCM-Leitung, zum Beispiel ltg1, an einen Koppelfeldanschluß, zum Beispiel A, des Koppelfeldes K in der beschriebenen Weise angeschlossen. Diese PCM-Leitung pro Anschlußgruppe führt innerhalb derselben zu einer Durchschalteeinrichtung TSU, deren Bedeutung und Funktionsweise in der bereits genannten deutschen Offenlegungsschrift 28 26 1 13 genauer beschrieben wird. Bei dieser Durchschalteanordnung handelt es sich um ein Teilkoppelfeld, über das sowohl die genannten Datenverbindungen als auch die Verbindungen von und zu Teilnehmern und von und zu Verbindungsleitungen durchgeschaltet werden. Unter «Verbindungsleitungen» sind selbstverständlich auch Kanäle von angeschlossenen PCM-Verbindungsleitungen zu verstehen. Der Anschluß dieser Teilnehmerleitungen, Verbindungsleitungen und Kanäle ist den bereits genannten Literaturstellen zu entnehmen.

Über eingangsseitig an eine Anschlußgruppe angeschlossenen Teilnehmerleitungen, Verbindungsleitungen und Kanäle treffen verschiedenerlei Informationen ein, zum Beispiel Anrufsignale von Teilnehmerstationen, die eine Verbindung herzustellen wünschen, ferner Wahlkennzeichen von diesen Teilnehmerstellen, aber auch über Verbindungsleitungen und Kanäle, ferner Leitungszeichen über Verbindungsleitungen sowie in Zuordnung zu Kanälen. Teilnehmeranschlußschaltungen zum Anschluß von Teilnehmerleitungen, Leitungsabschlußschaltungen zum Anschluß von ankommend und/oder abgehend belegbaren Orts- und Fernverbindungsleitungen, Internverbindungssätze, Wahlempfangssätze und dergleichen sind teilnehmerindividuelle und/oder verbindungsindividuelle Schalteinrichtungen.

Das Gruppensteuerwerk nun dient in an sich bekannter Weise zur Abwicklung der Aufnahme der zuvor erwähnten eintreffenden verbindungsindividuellen Informationen. Ein Gruppensteuerwerk nimmt außerdem eine Verarbeitung oder eine Vorverarbeitung dieser aufgenommenen Informationen jeweils in Zuordnung zu der betreffenden Teilnehmerleitung, Verbindungsleitung oder zu dem betreffenden Kanal vor. Außerdem werden einige solcher Informationen in dem dem Gruppensteuerwerk jeweils individuell zugeordneten Speicher SP zwischengespeichert und zwar mit Hilfe einer Eingabe-Ausgabe-Einrichtung IOP. Ferner hat das Gruppensteuerwerk die Aufgabe, Signale und Steuersignale über diese Leitungen (Teilnehmerleitungen und Verbindungsleitungen, sowie Kanäle) zur Aussendung zu bringen, zum Beispiel Rufwechselstromimpulse und Hörtonsignale über Teilnehmerleitungen sowie Wahlkennzeichen und Leitungszeichen und dergleichen über abgehend belegte Verbindungsleitungen.

Über das einer Anschlußgruppe zugehörige Teilkoppelfeld werden Verbindungen hinsichtlich der Verbindungsaufbaurichtung sowohl ankommend von einer Leitung (Teilnehmerleitung, Verbindungsleitung bzw. ein entsprechender Kanal) in Richtung zum zentralen Koppelfeld K hin als auch von diesem abgehend zu einer solchen Leitung durchgeschaltet. Bei einer Verbindungsherstellung erfolgt zunächst eine Durchschaltung zum Beispiel von einer Teilnehmerleitung über die betreffende Anschlußgruppe zum zentralen Koppelfeld K. Die für die weitere Durchschaltung der betreffenden Verbindung über dieses Koppelfeld erforderlichen Daten werden vom Gruppensteuerwerk über die betreffende, bereits erwähnte Datenverbindung zum Zentralsteuerwerk CP übertragen. Zur Vollständigkeit sei auch erwähnt, daß es ebenfalls Daten gibt, die von Gruppensteuerwerk zu Gruppensteuerwerk nicht über das Zentralsteuerwerk, sondern auf anderem Wege übertragen werden (vgl. DE-A-31 28 365/VPA 81 P 6257). Die weitere Verbindungsdurchschaltung erfolgt über eine Anschlußgruppe (gegebenenfalls dieselbe Anschlußgruppe, in der Regel aber eine andere Anschlußgruppe), wozu das betreffende Gruppensteuerwerk der jeweiligen Anschlußgruppe tätig werden muß, bwz. die betreffenden Gruppensteuerwerke der jeweiligen Anschlußgruppen tätig werden müssen.

Für ein Gruppensteuerwerk gibt es also hinsichtlich der Verbindungsaufbaurichtung Durchschaltevorgänge verschiedener Art, und zwar einerseits Durchschaltungen von einer Teilnehmerleitung oder Verbindungsleitung (oder einem entsprechenden Kanal) zum Koppelfeld K hin und andererseits Durchschaltungen in umgekehrter Richtung. Die Durchschaltungen über ein Teilkoppelfeld unterscheiden sich außerdem in solche von und zu Teilnehmerleitungen einerseits und von und zu Verbindungsleitungen (bzw. Kanälen) andererseits.

Die im Zusammenhang dieser jeweils pro Verbindung erforderlichen Durchschaltvorgänge durchgeführten Informationsaufnahmevorgänge und/oder Informationsabgabevorgänge nehmen wenigstens je einmal pro Durchschaltevorgang das jeweilige Gruppensteuerwerk in Anspruch. Die jeweilige Art der Durchschaltung (ankommend oder abgehend von oder zu Teilnehmerleitung oder Verbindungsleitung) ist maßgebend für die mit der jeweiligen Inanspruchnahme des Gruppensteuerwerks zwangsläufig verbundene Informationsverarbeitungs-Verkehrsbelastung pro Durchschaltevorgang — wie bereits ausgeführt wurde, werden von den Gruppensteuerwerken die Informationen, die sie im Zusammenhang mit einem Durchschaltevorgang aufnehmen, unverändert oder vorverarbeitet an das ihnen gemeinsame zentrale Steuerwerk weitergeleitet. Ebenso gibt auch das zentrale Steuerwerk Informationen an die Gruppensteuerwerke aus, um darin erforderliche abgehende Durchschaltungen durchzuführen und Signale und Steuersignale über die betreffenden Leitungen (Teilnehmerleitungen und Verbindungsleitungen bzw. Kanäle) abzugeben.

Jeder Anruf seitens einer Teilnehmerstelle und jede ankommende Belegung einer Verbindungsleitung (bzw. eines entsprechenden Kanales) erfordert also vom betreffenden Gruppensteuerwerk eine bestimmte Arbeitsleistung. Jede solche Arbeitsleistung wird anhand eines Initial-Schaltkennzeichens für das jeweilige Gruppensteuerwerk erkennbar. Ein solches Initial-Schaltkennzeichen ist bei einer Teilnehmerleitung mit Schleifenimpulsgabe zum Beispiel der Schleifenschluß, der das Anrufsignal darstellt. Ein solches Initial-Schaltkennzeichen ist bei einer Verbindungsleitung zum Beispiel das c-Ader-Belegungssignal bei ankommender Belegung. Entsprechendes gilt für verbindungsindividuelle Kanäle.

Die genannten Initial-Schaltkennzeichen sind also voneinander verschieden, und zwar je nach der betreffenden Art von Leitung (Teilnehmerleitung oder Verbindungsleitung). Im Zusammenhang mit der Durchschaltung eines Teilabschnittes einer herzustellenden Verbindung repräsentieren sie jeweils ein entsprechendes Maß an für das betreffende Gruppensteuerwerk zu erwartender Informationsverarbeitungs-Verkehrsbelastung, insbesondere in Verbindung mit Aufnahme, Verarbeitung und/oder Abgabe von Informationen. Für die verschiedenen Teilabschnitte durchzuschaltender Verbindungen sind also bestimmte diesbezügliche Maße typisch, die bei gleichartigen Teilabschnitten einer durchzuschaltenden Verbindung gleich, bei den verschiedenen Teilabschnitten aber unterschiedlich sind. Was für jedes der Gruppensteuerwerke gilt, gilt in entsprechender Weise auch für das zentrale Steuerwerk CP. Je nach dem, ob es sich bei einer über das Koppelfeld K durchzuführenden Durchschaltung um eine Internverbindung, eine ankommende oder abgehende Ortsverbindung oder eine ankommende oder abgehende Fernverbindung handelt, ist das Ausmaß der Informationsverarbeitungs-Verkehrsbelastung pro Durchschaltung für das zentrale Steuerwerk verschieden groß, und zwar je nach Art der jeweils herzustellenden Verbindung.

Das bereits erwähnte Zentralsteuerwerk CP ist ein zentrales informationsverarbeitendes Schaltwerk. Die dezentralen Steuereinrichtungen GP1 bis GPn sind teilzentrale informationsverarbeitende Schaltwerke. Wie bereits erläutert wurde, findet der Datenaustausch zwischen den teilzentralen Schaltwerken GP1 bis GPn einerseits und dem zentralen Schaltwerk CP andererseits über die Pufferspeicher MB statt. Informationen, die zum zentralen Schaltwerk hin zu übertragen sind, werden über die Leitungen za, ze und h weitergegeben. Informationen, die vom zentralen Schaltwerk CP zu den teilzentralen Schaltwerken GP1 bis GPn abgegeben werden, werden über den Weg c übertragen.

Wie bereits erwähnt wurde, und wie ganz allgemein bekannt, weist das zentrale Schaltwerk ja hinsichtlich seiner Informations-Verarbeitungskapazität — und sei es noch so leistungsfähig — eine begrenzte Leistungsfähigkeit auf. Diese Leistungsfähigkeit betrifft die Anzahl von Informationsverarbeitungsvorgängen, die pro Zeiteinheit abgewickelt werden können. Die Belastbarkeit eines jeden zentralen Schaltwerkes hängt grundsätzlich von seinem Aufbau (Struktur, Programmabwicklung und Befehlsausführungsgeschwindigkeit) und von der Art der ihm laufend übertragenen Informationsverarbeitungsvorgänge ab. Diese sind in der Regel von unterschiedlicher Art. Sie treten gemischt auf; die Belastbarkeit betrifft deshalb die jeweils gegebene Mischung von Informationsverarbeitungsaufträgen.

Die Erfahrung lehrt nun, daß die Zusammensetzung von Informationsverarbeitungsvorgängen verschiedener Art sich während des Betriebes eines zentralen Schaltwerkes verschieben kann. So kann es zum Beispiel sein, daß zu bestimmten Tageszeiten überwiegend Ortsverbindungen herzustellen sind, während zu bestimmten anderen Tageszeiten überwiegend Fernverbindungen herzustellen sind. Ferner kann es sein, daß zu bestimmten Tageszeiten mehr Kurzzeitgespräche stattfinden und zu anderen Tageszeiten mehr Langzeitgespräche. Ferner kann es sein, daß zu bestimmten Tageszeiten mehr Sonderdienste in Anspruch genommen werden als zu anderen Tageszeiten. In diesem Zusammenhang spricht man auch von einem sich ändernden Verkehrsspektrum, das unterschiedliche Zusammensetzungen hinsichtlich der verschiedenen Arten von möglichen Verbindungen aufweisen kann. Darüber hinaus kann der Anteil von jeweils vor vollständiger Verbindungsherstellung abgebrochenen Belegungen an der Gesamtheit der Verbindungsherstellungsvorgänge zu bestimmten Tageszeiten größer sein als zu bestimmten anderen Tageszeiten. In diesem Zusammenhang spricht man auch von einem sich ändernden Belegungsspektrum bezüglich Anteil und Vollständigkeitsgrad der Belegungsversuche.

Aus den verschiedenen zuvor angegebenen Gründen ist die Belastbarkeit bezüglich der Anzahl der eintreffenden Belegungsversuche eines zentralen Schaltwerks nicht konstant. Um ein zentrales Schaltwerk optimal auszulasten, ist es deshalb zweckmässig, die zu den verschiedenen Betriebszeiten aufgrund der unterschiedlichen Voraussetzungen gegebenen unterschiedlichen Belastbarkeiten zu berücksichtigen. Deshalb ist es zweckmäßig, solche Steuerwerke mit Meßeinrichtungen zur Bestimmung der Belastbarkeit auszustatten, die die stets schwankende Belastung über Zeiträume integrieren, die jeweils groß genug sind, um ein Bestimmungsergebnis mit ausreichender Ergebnisgenauigkeit zu gewährleisten, wobei also Kurzzeitschwankungen nicht zum Tragen kommen.

Eine dem zuvor angegebenen Zweck dienende Meßeinrichtung kann zum Beispiel auf der Basis arbeiten, daß ein zentrales Steuerwerk nach jeweils erfolgter Abarbeitung sämtlicher vorliegender Informationsverarbeitungsaufträge ein Anforderungssignal erzeugt, das u.a. dieser Meßeinrichtung zugeführt wird. Diese Meßeinrichtung zählt nun über bestimmte Zeiträume gleicher Größe hinweg, zum Beispiel über vier Sekunden hinweg, die Anzahl solcher aufgetretener Anforderungssignale im zentralen Schaltwerk. In der Zeichnung ist eine dem zentralen Schaltwerk CP zugeordnete und mit ihm über eine Leitung n verbundene Meßeinrichtung B dargestellt. Vom zentralen Schaltwerk erhält sie also über diese Leitung n das Anforderungssignal bei seinem jedesmaligen Auftreten. Die Meßeinrichtung B zählt in an sich bekannter Weise die Anforderungssignale ab. Von einer zentralen Zeitgebereinrichtung Zg erhält sie im Abstand von 4 Sekunden ein Zeitmarkierungssignal über die Leitung t1. Dieses Zeitmarkierungssignal bedeutet für einen Meßzeitraum das Ende und zugleich den Beginn für den jeweils nächstfolgenden Meßzeitraum. Die Meßeinrichtung B ermittelt nun die Anzahl der zwischen zwei solchen Zeitmarkierungen eintreffenden Anforderungssignale des jeweiligen zentralen Schaltwerks. Liegen längere Zeit keine Informationsverarbeitungsaufträge vor, so werden diese Anforderungssignale in Zeitabständen abgegeben, die jeweils einem Informationsverarbeitungsvorgang im Mittel entsprechen. Es ist auch möglich, anstelle von oder zusätzlich zu diesen Anforderungssignalen drittrangige Informationsverarbeitungsvorgänge vom zentralen Schaltwerk CP/ZW zur Meßeinrichtung B hin zu melden, also diese drittrangigen Informationsverarbeitungsvorgänge einer Ermittlung der Belastbarkeit zugrunde zu legen. Solche drittrangigen Informationsverarbeitungsvorgänge können zum Beispiel interne Prüfroutine-Programmabläufe oder dergleichen sein.

Die Meßeinrichtung B zählt also jeweils innerhalb eines Meßzeitraumes die erhaltenen Anforderungssignale und bildet hieraus einen Belastbarkeitsmeßwert. Außer diesem gibt es einen Belastbarkeitskonstantwert. Dieser ist vor erstmaliger Inbetriebnahme einer Fernmeldevermittlungsanlage der hier beschriebenen Art rechnerisch aus bekannten Ausgangswerten ermittelt und ist im Speicher B2 der Meßeinrichtung B gespeichert. Er gibt die Anzahl von Informations-Verarbeitungsvorgängen an, die — langfristig gesehen — von einem zentralen Schaltwerk der hier gegebenen Art normalerweise abgewickelt werden. Dieser Konstantwert ist bei Inbetriebnahme der Vermittlungsanlage außerdem in einem Speicher B1 gespeichert. Die Meßeinrichtung B subtrahiert nun von dem im Speicher B1 gespeicherten Wert den jeweils aus der Anzahl von pro Meßzeitraum erhaltenen Anforderungssignalen ermittelten Belastbarkeitsmeßwert und dividiert die sich hierbei ergebende Differenz wiederum durch den im Speicher B1 gespeicherten Wert. Ergibt sich hierbei der Wert 1, so ist hieran erkennbar, daß das zentrale Schaltwerk CP in dem jeweiligen Meßzeitraum pausenlos mit Informationsverarbeitungsvorgängen beschäftigt war. Darin liegt ein Indiz dafür, daß das zentrale Schaltwerk in dem betreffenden Meßzeitraum zu hoch belastet war. Das zentrale Schaltwerk soll nur zu 95 % ausgelastet sein. Ergibt der erwähnte Divisionsvorgang den Wert von 0,95, so ergibt sich daraus, daß das zentrale Schaltwerk in der erwähnten Weise zu 95 % ausgelastet war. Ergibt sich jedoch ein niedrigerer Wert, zum Beispiel von 0,93, so ist hieran erkennbar, daß das zentrale Schaltwerk nur zu 93 % in dem betreffenden Meßzeitraum ausgelastet war, also zu niedrig.

Je nach dem erhaltenen Ergebnis aus dem betreffenden Divisionsvorgang pro Meßzeitraum gibt die Meßeinrichtung B entweder überhaupt kein Signal zu einem Belegungsratenzähler W hin ab, oder sie gibt bei zu niedriger — bzw. zu hoher — Belastung des zentralen Schaltwerkes (wenn also die Soll-Belastbarkeit von 95 % höher — bzw. niedriger — als die zur Zeit tatsächlich vorliegende Belastung des zentralen Schaltwerks ist), ein Steigerungssignal über den Weg + b — bzw. ein Herabsetzungssignal über den Weg — b.

Wie zuvor ausgeführt wurde, wird das Steigerungssignal — bzw. das Herabsetzungssignal — von der Meßeinrichtung B dem Belegungsratenzähler W zugeführt. In ihm ist ein weiter unten erklärter Vergleichswert (Regelnormal) gespeichert. Dieser wird bei Erhalt des Steigerungssignales — bzw. des Herabsetzungssignales — erhöht — bzw. erniedrigt. Diese Signale, d.h. jeweils das eine oder das andere, werden von der Meßeinrichtung B dem Belegungsratenzähler W zugeführt. Diesen Belegungsratenzähler durchlaufen sämtliche Informationsverarbeitungsaufträge, die über die Leitung za eintreffen und über die Leitung ze weitergegeben werden. Bei diesen Informationsverarbeitungsaufträgen handelt es sich teilweise um Initialaufträge und teilweise um Nachfolgeaufträge. Die zur Herstellung einer Verbindung von einem rufenden Teilnehmer abgegebenen Schaltkennzeichen bestehen aus einem Initial-Schaltkennzeichen an erster Stelle (Anrufsignal) und aus Nachfolge-Schaltkennzeichen, die in Zeitabständen, die durch die Art und Weise des jeweils rufenden Teilnehmers bedingt sind, eintreffen. Im Zusammenhang mit jeweils einer Verbindungsherstellung gehören also immer ein Initial-Schaltkennzeichen und eine Anzahl von Nachfolge-Schaltkennzeichen zusammen. Nachfolge-Schaltkennzeichen können darüber hinaus jeweils im Zusammenhang mit einer Verbindungsherstellung das Wahlendekennzeichen, das Meldekennzeichen, das Endekennzeichen und dergleichen sein, also Leitungskennzeichen, sowie Gebührenzählimpulse. Diese Schaltkennzeichen werden mit Hilfe eines dezentralen Schaltwerks (teilzentrales Schaltwerk) GP1 aufgenommen; aus ihnen ergeben sich Informationsverarbeitungsaufträge, die gemäß der Unterscheidung der Schaltkennzeichen in Initial-Schaltkennzeichen und Nachfolge-Schaltkennzeichen ebenfalls zu unterscheiden sind, und zwar in Initialaufträge und Nachfolgeaufträge.

Über die Leitung za treffen nun sukzessive nacheinander Informationsverarbeitungsaufträge ein. Diese bestehen zu einem kleineren Teil aus Initialaufträgen und zu einem größeren Teil aus Nachfolgeaufträgen. Diese Informationsverarbeitungsaufträge treffen bezüglich der verschiedenen Verbindungsherstellungsvorgänge ungeordnet, d.h. also gemischt ein. Sie durchlaufen den Belegungsratenzähler und werden in einem FiFo-Speicher gespeichert. Dieser FiFo-Speicher weist in bekannter Weise eine größere Anzahl von Speichereinheiten auf, wobei jeweils eine Speichereinheit zur Speicherung eines Informationsverarbeitungsauftrages dient. In der gleichen Reihenfolge, wie die Informationsverarbeitungsaufträge über die Leitung ze zum FiFo-Speicher gegeben werden, werden sie auf Abruf durch das zentrale Schaltwerk CP/ZW über die Leitung h vom FiFo-Speicher zu diesem zentralen Schaltwerk weitergegeben.

Der Belegungsratenzähler W dient nun als eine weitere Meßeinrichtung zur Bestimmung eines Abweichens der kurzzeitig später zu erwartenden Informationsverarbeitungs-Arbeitsbelastung des zentralen Schaltwerks von seiner Leistungsfähigkeit. Der Belegungsratenzähler W, der von sämtlichen Informationsverarbeitungsaufträgen durchlaufen wird, zählt von diesen lediglich die Initialaufträge.

Für die zuletzt erwähnte Zählung bestehen zwei Möglichkeiten. Die eine Möglichkeit besteht darin, daß eine zum Beispiel jede Sekunde über die Leitung t2 zum Belegungsratenzähler übertragene Zeitmarkierung in dem Belegungsratenzähler W jeweils einen Zählvorgang startet bzw. stoppt, und daß ein zwischen je zwei Zeitmarkierungen gewonnenes Zählergebnis mit dem Vergleichswert verglichen wird. Die andere Möglichkeit besteht darin, daß ein Zähler durch die Initialaufträge vorwärtsgeschaltet wird und in gleichmäßigen Zeitabständen unabhängig von den Initialaufträgen rückwärtsgeschaltet wird, und daß der Vergleichswert eine Anzahl von Rückwärtsschaltvorgängen bewirkt, die jeweils zwischen zwei in gleicher Weise wie in den zuvor angegebenen Zeitmarkierungen ausgeführt werden.

Es ist also für Initialaufträge (Initial-Schaltkennzeichen) und Nachfolgeaufträge (Nachfolge-Schaltkennzeichen) ein gemeinsamer FiFo-Speicher vorgesehen; der Belegungsratenzähler W selektiert von den dem FiFo-Speicher zugeführten Informationsverarbeitungsaufträgen (Schaltkennzeichen) die Initialaufträge, um den Zählvorgang nur auf diese zu beschränken. Wie ausgeführt, führt der Belegungsratenzähler W die Zählung in aufeinanderfolgenden Zählzeitintervallen durch, die durch die genannten Zeitmarkierungen begrenzt sind; er wird jeweils nach Ablauf eines Zählzeitintervalles durch die Zeitmarkierung in seiner Ausgangsposition zurückgestellt und liefert ein am Ende eines jeden Zählzeitintervalles mit einem Vergleichswert zu vergleichendes Zählergebnis. Dieser Vergleichswert (Regelnormal) stellt einen Schwellenwert dar. Die andere Möglichkeit besteht darin, daß der Belegungsratenzähler W durch die Initialaufträge vorwärtsgeschaltet und kontinuierlich schrittweise zurückgeschaltet wird. In diesem Falle hält der Belegungsratenzähler also jederzeit ein Zählergebnis bereit, das einem andauernden, wenigstens aber einmal pro Vorwärtszählvorgang und/oder pro Rückschaltevorgang anhand eines Schwellenwertes durchgeführten Vergleichsvorgang unterworfen wird.

In beiden Fällen der speziellen Ausbildung des Belegungsratenzählers W, wie sie zuvor beschrieben wurden, wird aufgrund einer Überschreitung des Schwellenwertes die Zufuhr von Initialaufträgen (Initial-Schaltkennzeichen) zum FiFo-Speicher gedrosselt, wodurch eine Annahme aller auch jeweils zu einem Initialauftrag (Initial-Schaltkennzeichen) gehörenden Nachfolgeaufträge (Nachfolge-Schaltkennzeichen) verhindert ist. Um dies nun zu bewerkstelligen, ist eine Restriktionseinrichtung L vorgesehen. Überschreitet in dem Belegungsratenzähler W der Zählwert den Schwellenwert, also den Vergleichswert, so gibt der Belegungsratenzähler W ein Minderungssignal über die Leitung −v zur Restriktionseinrichtung L. Ist die Überschreitung des Schwellenwertes durch den Zählwert wieder behoben, so gibt der Belegungsratenzähler W ein Mehrungssignal +v zur Restriktionseinrichtung L hin ab. Die Abgabe eines Minderungssignales oder Mehrungssignales vom Belegungsratenzähler W zur Restriktionseinrichtung L erfolgt in gleichmäßigen Zeitabständen von zum Beispiel 1 Sekunde.

Die Restriktionseinrichtung L dient nun dazu, in den Anschlußgruppen LTG1 bis LTGn zu bewirken, daß hier ein bestimmter Prozentsatz von Verbindungsherstellungsversuchen abgewiesen wird. Dadurch soll die Menge der einfallenden Informationsverarbeitungsaufträge reduziert werden. Hierzu ist in jedem der dezentralen Schaltwerke GP ein Speicher Zi vorgesehen, in dem der Prozentsatz von Anrufsignalen gespeichert ist, die bei einer Erkennung von Informationsverarbeitungs-Verkehrsüberlastungen zur Abwehr solcher Überlastungen abgewiesen werden sollen. In diesem Speicher sind zum Beispiel die Prozentsätze 0 %, 25 %, 33,3 %, 50 % und 75 % speicherbar. Diese Prozentsätze geben an, welcher Anteil der eintreffenden Anrufsignale abzuweisen ist. Unter Abweisung ist zu verstehen, daß bei Eintreffen eines Anrufsignales an den betreffenden Teilnehmer ein dementsprechendes Signal ausgesendet wird, zum Beispiel Besetztsignal oder ein zum Warten aufforderndes Signal oder eine Ansage, und daß verhindert wird, daß von ihm abgegebene Wahlkennzeichen aufgenommen und weitergeleitet werden. Ebensogut ist es auch möglich, anstelle eines Prozentsatzes für abzuweisende Anrufsignale auch einen Prozentsatz für anzunehmende Anrufsignale, also eine «Durchlaßquote» zu speichern. Die Abweisung von Anrufsignalen mittels einer Abweiseinrichtung kann nach dem Abzählprinzip erfolgen, wobei also ein jeweils rufender Teilnehmer zufällig Erfolg oder Mißerfolg haben kann mit seinem Verbindungsherstellungsversuch, oder es kann auch unterschieden werden zwischen Anrufen von Teilnehmern und Leitungen verschiedener Prioritätsklassen.

Daten über den jeweiligen Prozentsatz von abzuweisenden bzw. durchzulassenden Initialaufträgen werden von der Restriktionseinrichtung L zu den dezentralen Schaltwerken GP1 übertragen und in ihnen gespeichert. Eine solche Übertragung dieser Daten findet entweder laufend statt oder immer nur dann, wenn eine Vergrößerung oder Verkleinerung dieses Prozentsatzes zu melden ist. In den dezentralen Schaltwerken für die Speicherung des Prozentsatzes vorgesehenen Speicherschaltmitteln Zi wird immer bei Eintreffen von eine Vergrößerung bzw. eine Verkleinerung des Abweisungsprozentsatzes meldenden Daten schrittweise der gespeicherte Prozentsatz verringert bzw. vergrößert.

Es ist nun vorgesehen, daß diese der Meldung der Vergrößerung bzw. Verkleinerung des Prozentsatzes dienenden Daten gemeinsam mit den der Abwicklung der Vermittlungsvorgänge vom zentralen Schaltwerk zu den dezentralen Schaltwerken übertragenen Daten, insbesondere den Einstell- und Steuerinformationen, vom zentralen Schaltwerk zu den dezentralen Schaltwerken und in diesen zu den Speicherschaltmitteln Zi übertragen werden. Hierzu ist die Restriktionseinrichtung L mit dem zentralen Schaltwerk CP/ZW über die Leitung d verbunden. Sie meldet über diesen Weg Daten bezüglich des geltenden bzw. einzustellenden Prozentsatzes. Das zentrale Schaltwerk CP/ZW gibt diese Daten, die jeweils Daten relativ geringen Informationsinhaltes sind, den der Abwicklung der Vermittlungsvorgänge dienenden Einstell- und Steuerinformationen bei, die also vom zentralen Schaltwerk zu den dezentralen Schaltwerken laufend übertragen werden. Es ist also nicht erforderlich, daß für die Übertragung der den jeweiligen Prozentsatz betreffenden Daten eigene Nachrichten-Transaktionen gestartet werden müssen, sondern diese Daten werden den Einstell- und Steuerinformationen für die Verbindungsherstellung beigegeben. Da der Datenaustausch mit den verschiedenen Anschlußgruppen unterschiedlich intensiv ist, werden die den jeweiligen Prozentsatz meldenden Daten also besonders schnell zu denjenigen dezentralen Schaltwerken hin transportiert, die in einem besonders regen Datenaustausch mit dem zentralen Schaltwerk stehen. Dadurch, daß der erwähnte Prozentsatz in den dezentralen Schaltwerken gespeichert ist, ist es während der gesamten Dauer einer Lastabwehrphase gleich starker Lastabwehr nicht erforderlich, Daten hierüber vom zentralen Steuerwerk zu den dezentralen Steuerwerken zu übertragen, die die Informationsverarbeitungs-Verkehrsüberlastung betreffen. Treten Informationsverarbeitungs-Verkehrsüberlastungen von einer Anschlußgruppe her auf, so werden die betreffenden Restriktionsdaten zuerst zu dieser hin gemeldet.

Die Informationsverarbeitungsaufträge (Schaltkennzeichen) treffen in ihrer jeweiligen zeitlichen Folge also gemischt hinsichtlich verschiedener Serien (eine Serie entspricht immer einem Verbindungsherstellungsvorgang) aufeinanderfolgend ein; sie zeigen ihre jeweilige Serienzugehörigkeit durch eine jedem Schaltkennzeichen beigegebene Ursprungsadresse an. Diese Ursprungsadresse gibt die jeweilige Zuordnung zu der Teilnehmeranschlußschaltung eines rufenden Teilnehmers oder einem Verbindungssatz oder einer Leitungsabschlußschaltung oder dergleichen, also zu einer der genannten verbindungsindividuellen Schalteinrichtungen an.

Es ist vorgesehen, daß nach einer erfolgten Abwehr einer Informationsverarbeitungs-Verkehrsüberlastung bei einer Abnahme eines entsprechenden Staus an Informationsverarbeitungs-Anforderungen und nach einem Rückgang des von der Restriktionseinrichtung L an das Schaltwerk CP/CW (zur oben beschriebenen Verteilung an die dezentralen Schaltwerke GP1) abgegebenen Abweisungs-Prozentsatzes auf den Wert Null und nach Ablauf einer festgelegten, vom Zeitpunkt dieser Rücksetzung gemessenen Mindest-Karenzzeit von zum Beispiel 12 Sekunden, während der also für den für die Belastbarkeit maßgebenden Belastbarkeitsmeßwert aufgrund des Rückganges der tatsächlichen Belastung stets höhere Werte eingestellt werden, die Regelung des im Speicher S des Zählers W gespeicherten Vergleichswertes vorläufig beendet wird. Diese Regelung erfolgte anhand des von der Meßeinrichtung B gewonnenen Belastbarkeitsmeßergebnisses und anhand des daraus gebildeten Divisionsergebnisses.

Zur Abmessung der zuvor erwähnten Mindest-Karenzzeit ist eine Indikationseinrichtung E vorgesehen. Diese ist über eine Leitung e mit dem Ausgang der Restriktionseinrichtung L verbunden. Über diese Leitung e empfängt die Indikationseinrichtung E den jeweils von der Restriktionseinrichtung L ermittelten Abweisungsprozentsatz. Ferner ist die Indikationseinrichtung E über die Leitung t1 mit der Zeitgebereinrichtung Zg verbunden. Wenn ununterbrochen eine längere Zeit, zum Beispiel 12 Sekunden, keine Informationsverarbeitungs-Verkehrsüberlastung vorgelegen hat, also der Abweisungs-Prozentsatz auch so lange ununterbrochen den Wert Null gehabt hat, wird die Belastbarkeitsmessung deaktiviert. Hierzu überwacht die Indikationseinrichtung E also jeweils beginnend vom Zeitpunkt der Rücksetzung des Abweisungs-Prozentsatzes in der Restriktionseinrichtung L während der von diesem Zeitpunkt an gemessenen Mindest-Karenzzeit, daß dieser Prozentsatz auf dem Wert Null verbleibt. Wird diese Bedingung erfüllt, so gibt die Indikationseinrichtung E über den Signalweg w ein entsprechendes Signal zum Belegungsratenzähler W hin ab.

Ebenfalls zu Beginn der Mindest-Karenzzeit, also jedesmal dann, wenn der von der Restriktionseinrichtung L angegebene Abweisungsprozentsatz den Wert Null erreicht, gibt die Indikationseinrichtung E ein Signal über den Signalweg w zum Belegungsratenzähler W hin weiter, das den Beginn einer potentiellen Mindest-Karenzzeit kennzeichnet. Dieses Signal bewirkt im Belegungsratenzähler W, daß der momentan im Speicher S gespeicherte Vergleichswert in einen Zusatzspeicher s übertragen und hier gespeichert wird. Ein in diesen gegebenenfalls bereits früher gespeicherter Vergleichswert wird dabei zugleich gelöscht.

Während der Mindest-Karenzzeit ist ja definitionsgemäß der Abweisungsprozentsatz ununterbrochen gleich Null. Abweisungen waren also während dieser Zeit nicht erforderlich. In der Regel ist dies durch einen entsprechenden Belastungs-Rückgang verursacht. Dieser nun hat während der Mindest-Karenzzeit dafür gesorgt, daß der Vergleichswert des Zählers W, gespeichert in seinem Speicher S, laufend mit positiver Tendenz nachgeregelt wurde, also allmählich einen relativ hohen Wert angenommen hat. Praktisch bedeutet dies, daß bei einem Wiederanwachsen des Zustromes von Informations-Verarbeitungsaufträgen, bzw. von Initialschaltkennzeichen, zunächst eine relativ hohe Anzahl von diesen angenommen werden würde, also zunächst noch keine Abweisungen stattfinden würden, und zwar so lange, bis schließlich von der Meßeinrichtung B her die durch die Belastbarkeitsmessung gesteuerte Regelung des Vergleichswertes diesen so weit wieder herab gesetzt haben würde, daß anhand von entsprechend wieder niedriger werdenden Vergleichswerten der Abweisungsprozentsatz wieder definitve Werte annimmt, also von dem Wert Null aus ansteigt. Dies aber würde zu einer vorübergehenden Überbelastung des Zentralsteuerwerkes führen. Um diesen Effekt zu vermeiden, ist in der angedeuteten Weise vorgesehen, daß ein bei Absinken des Abweisungsprozentsatzes auf den Wert Null gegebener Vergleichswert im Speicher S des Zählers W in seinen Zusatzspeicher s übertragen wird, damit er zu einem späteren Zeitpunkt, und zwar nach Beendigung einer Lastregulierphase und einer Phase des Ruhens der Abweisungsvorgänge und nach einer erneuten Initialisierung der Abweisungsvorgänge aus dem Zusatzspeicher s in den Speicher S wieder zurückübertragen wird.

Nach einer Deaktivierung der Vergleichswert-Regelung arbeitet der Zähler W mit einem Initialisierungs-Vergleichswert, der höher ist als der gespeicherte Vergleichswert im Speicher S. Dies ist der bereits weiter oben erwähnte «besondere» Schwellenwert. Eine erneute Initialisierung der Vergleichswert-Regelung und der Bildung von Abweisungsprozentsatz-Daten kann durch zweierlei Ursachen herbeigeführt werden. Erreicht der Belegungsratenzähler W, der die Initialschaltkennzeichen zählt, erneut einen wieder höheren Wert, und zwar einen Zählwert, der gleich oder höher ist als der Schwellenwert, so wird erneut die Auswertung des von der Meßeinrichtung B gelieferten Bestimmungsergebnisses gestartet. Dies geschieht auch, wenn der Füllungsgrad des sowohl Initialaufträge als auch Nachfolgeaufträge speichernden FiFo-Speichers einen bestimmten Grenzwert erreicht oder überschreitet. Der Zeitraum zwischen Initialisierung und Deaktivierung stellt eine Lastregulierphase dar; in ihr befindet sich die aktuelle Informationsverarbeitungs-Arbeitsbelastung in einem den Vollast- und Überlastbereich umfassenden Lastregulierbereich.

Es ist also vorgesehen, daß der im Speicher S gespeicherte Initialisierungswert so hoch festgelegt ist, daß die Initialisierung nur stattfindet, wenn bei einer nur kurzzeitigen Überlast diese die Belastbarkeit ganz wesentlich übersteigt. In diesem Fall erfolgt die Initialisierung sehr kurzfristig. Übersteigt die erneut eintretende Überlast die Belastbarkeitsgrenze dagegen nur wenig, so dauert es länger, bis die Initialisierung einsetzt. Hierfür ist ein in der Meßeinrichtung F des FiFo-Speichers FiFo gespeicherter Grenzwert vorgesehen. Wenn bei relativ geringer aber länger andauernder Überlast sich dieser Speicher stetig füllt, erfolgt die Initialisierung dadurch, daß der Füllungsgrad dieses Speichers den Grenzwert erreicht oder überschreitet. Die Verzugszeit ist hierbei näherungsweise umgekehrt proportional dem Ausmaß der Überlastung und größer als die Reaktionszeit des Zählers W auf plötzlich eintretende starke Überlast. Der im Speicher S gespeicherte Initialisierungswert und der in der Meßeinrichtung F des FiFo-Speichers gespeicherte Grenzwert ergänzen also einander in ihrer Wirkung, und zwar in der Weise, daß der im Speicher S gespeicherte Initialisierungswert für ein möglichst rasches Erkennen von hoher Überlastung und der in der Meßeinrichtung F gespeicherte Grenzwert für ein sicheres Erkennen auch von geringer Überlastung Sorge trägt. Die Belastung des zentralen Steuerwerks wird außer durch die Zuführung von Informationsverarbeitungsaufträgen von den dezentralen Schaltwerken GP1 - GPn her (externes Überangebot) auch durch interne Abläufe verursacht, zum Beispiel Schaltungsabläufe für Zwecke der Prüftechnik und/oder der Sicherungstechnik (internes Überangebot).

Sowohl der Initialisierungswert als auch der Grenzwert dienen in der angegebenen Weise also in Phasen des Ruhens der Abweisungsvorgänge dazu, ein Ansteigen der Belastung des zentralen Schaltwerks richtig zu erkennen, wobei die Höhe eines Belastungssprunges (erkennbar mittels Initialisierungswert) und/oder eine länger andauernde relativ geringe Überlastung (erkennbar mittels des obengenannten Grenzwertes) maßgebend sein kann. Beide Werte sind in der angegebenen Weise im Speicher S des Belegungsratenzählers W bzw. in der Meßeinrichtung F des FiFo-Speichers gespeichert. Erfindungsgemäß ist vorgesehen, daß der im Speicher S gespeicherte Wert, also der für die Initialisierung der Übertragung der Abweisdaten maßgebende Schwellenwert sowie das bei aktiver Überlast zum Vergleich dienende Regelnormal mittels jeweils in einem Zeitraum zwischen Absinken der Abweisrate auf den Wert Null und erneuter Überschreitung dieses Schwellenwertes, also in Phasen des Ruhens der Abweisvorgänge, gewonnener Belastbarkeits-Meßergebnisse laufend justiert werden. Diese Belastbarkeits-Messungen werden in den Phasen des Ruhens der Abweisungsvorgänge ebenfalls mit Hilfe der Meßeinrichtung B sowie mit Hilfe des Belegungsratenzählers W durchgeführt. Für diese zeitlich also außerhalb der Lastregulierphasen stattfindenden Belastbarkeits-Messungen sind Meßzeitintervalle festgelegt, die zum Ausgleich von kurzzeitigen diesbezüglichen Schwankungen ausreichend groß bemessen sind, um den verbleibenden Meßfehler genügend klein zu halten. Innerhalb eines jeden Meßzeitintervalls wird nun die Anzahl von pro Meßzeitintervall eingetroffenen Informationsverarbeitungsaufträgen, insbesondere nur der Initialschaltkennzeichen, ermittelt. Ferner wird pro Meßzeitintervall mit Hilfe der Meßeinrichtung B die durch Informationsverarbeitungsaufträge verursachte derzeitige Belastung des zentralen Schaltwerkes in der bereits beschriebenen Weise gemessen. Dabei wird das Verhältnis einer in diesem Meßzeitintervall maximal zulässigen Verkehrsbelastung zu der in diesem Meßzeitintervall aus den eintreffenden Informationsverarbeitungsaufträgen resultierenden tatsächlichen Verkehrsbelastung gebildet. Mittels dieses durch die Meßeinrichtung B für jedes Meßzeitintervall gebildeten Verhältniswertes wird dann die ermittelte Anzahl von pro Meßzeitintervall eingetroffenen Informationsverarbeitungsaufträgen, insbesondere nur der Initialschaltkennzeichen, nach Maßgabe dieses Verhältnisses erhöht und zur laufenden Justierung des Schwellenwertes und des Regelnormals im Speicher S des Belegungsratenzählers verwendet. Außerdem kann vorgesehen werden, den Anfangswert für das Regelnormal zum Beispiel um 10 oder 20 % zu erhöhen, wodurch eine Abweisung dementsprechend erst später erfolgt.

Die Beschreibung wendet sich nun wieder der Darstellung der Vorgänge innerhalb der Lastregulierphasen zu. In einer solchen liefert die Meßeinrichtung B also ein die Belastbarkeit des zentralen Steuerwerkes betreffendes Bestimmungsergebnis, das die aus den weiter oben erläuterten Gründen stets etwas schwankende Belastbarkeit erfaßt und deren Werte über Zeiträume integriert, die jeweils ebenfalls groß genug sind, um dieses Bestimmungsergebnis mit ausreichender Ergebnisgenauigkeit zu gewährleisten. Dieses Bestimmungsergebnis findet in dem im Speicher B1 stets neu gespeicherten Belastbarkeitsmeßwert Ausdruck, ferner in den zum Belegungsratenzähler W hin übertragenen Steigerungs- und Minderungssignalen und in dem dadurch im Belegungsratenzähler W laufend regulierten Vergleichswert.

Wie weiterhin ausgeführt wurde, wird am Ende einer Lastregulierphase, also wenn die vom Belegungsratenzähler W periodisch gewonnenen Zählergebnisse laufend, d.h. von Zählergebnis zu Zählergebnis, kleiner werden, ein dabei im Moment des Erreichens oder Unterschreitens des derzeit im Speicher S gespeicherten Vergleichswertes vorhandener Wert, der also zugleich dem Vergleichswert und dem neuesten Zählwert entspricht, bei Beginn einer Mindest-Karenzzeit im Zusatzspeicher s gespeichert und bei Ablauf derselben aus diesem in den Speicher S übertragen. Dieser Wert bleibt nach Beendigung einer Lastregulierphase bis zum Beginn der durch eine Initialisierung eingeleiteten nächsten Lastregulierphase im Speicher s des Belegungsratenzählers W gespeichert. Dieser Wert dient als Ausgangswert für die Ermittlung der Startschwelle und des Regelnormals, bis nach Ende des ersten Meßzeitraumes ein neuerer Ausgangswert vorliegt und durch diesen der im Speicher S abgelegte Wert überschrieben wird. Durch die laufende Justierung der obengenannten Schwellenwerte bei nicht aktiver Überlastabwehr ist auch eine deutliche Verkürzung der Mindest-Karenzzeit zulässig, wodurch ein quasi berechtigtes längeres Aufrechterhalten des Überlastabwehrzustandes wesentlich verkürzt wird.

**Bezugszeichenliste**

| | |
|---|---|
| Ltg 1 | Zeitmultiplexleitung |
| Wx | Verbindungsleitung |
| Wz | Leitungsabschlußschaltung |
| T1 | Teilnehmerstelle |
| LTU1 - LTU8 | Mehrfachanschlußschaltungen |
| t1 - t32 | Teilnehmeranschlußschaltungen |
| SEU | Signalschaltung |
| LTG1 - LTGn | Anschlußgruppen |
| SES | Zeitmultiplexanschluß |
| ATU | Dämpfungsschaltung |
| TSU | Zeitkanalkoppler |
| SESC | Zeitkanalkoppeleinsteller |
| GP1 - GPn | teilzentrale Steuereinrichtungen |
| SBU/SMx | Zeichenpuffer |
| PU | Verarbeitungswerk |
| SSP | Leitwerk |
| MU | Speicher |
| Zi | Prozentsatzspeicher |
| IOP | Ein-Ausgabesteuerung |
| SP | Bediengerät |
| FD | Hintergrundspeicher |
| DF | Datenfernübertragungsanschluß |
| VX | Verbindungsleitung |
| Vz | Leitungsabschlußschaltung |
| A1 | Zeitmultiplexleitung |
| A2 | Zeitmultiplexleitung |
| A | Koppelfeldanschluß |
| RZE | eingangsseitige Raumlagenvielfach-Zeitlagenvielfach-Koppelstufe |
| RZA | ausgangsseitige Raumlagenvielfach-Zeitlagenvielfach-Koppelstufe |
| R | Raumvielfach-Koppelstufe |
| K | Zeitmultiplexkoppelfeld |
| KE | Koppelfeldeinstelleinrichtung |
| V1 | Speicher für Einstelldaten |
| m | Zeitmultiplexleitung |
| MB | Puffereinrichtung |
| ML | Datenkopf |
| MK | Datenkopf |
| CP | zentraler Prozessor |
| - b | Signalweg für Herabsetzungssignal |
| + b | Signalweg für Steigerungssignal |
| c | Informationsübertragungsweg |
| d | Leitung |
| e | Leitung für Abweisungsprozentsatzdaten |
| f | Leitung für Füllungsgraddaten |
| h | Informationsleitung |
| n | Leitung für Anforderungssignal |
| s | Zusatzspeicher |
| S | Speicher |
| t1 | Leitung für Zeitmarkierungssignal |
| t2 | Leitung für Zeitmarkierung |
| - v | Leitung für Minderungssignal |
| + v | Leitung für Mehrungssignal |
| v | Signalweg |
| V | Vergleicher |
| w | Signalweg |
| wb | Signalweg |
| W | Belegungsratenzähler |
| L | Restriktionseinrichtung |
| za | Informationsleitung |
| ze | Informationsleitung |

| Za | Zähler |
|---|---|
| Zg | Zeitgebereinrichtung |
| F | Meßeinrichtung |
| FiFo | FiFo-Speicher |
| Zw | zentrales Steuerwerk des zentralen Prozessors |
| B | Meßeinrichtung |
| B1 | Speicher |
| B2 | Speicher |
| E | Indikationseinrichtung |
| D | Datenleitung für Vermittlungsdaten |

**Patentansprüche**

1. Schaltungsanordnung für Fernmeldevermittlungsanlagen, insbesondere Fernsprechvermittlungsanlagen, mit informationsverarbeitenden zentralen Schaltwerken und diesen laufenden Reihen von Informationsverarbeitungsaufträgen zuführenden teilzentralen Schalteinrichtungen, wobei insbesondere der erste Informationsverarbeitungsauftrag jeder Reihe aus einem Initialschaltkennzeichen besteht, und mit in jenen jeweils einen Teil der Reihen von Informationsverarbeitungsaufträgen nach Maßgabe einer einstellbaren Abweisrate zurückhaltenden, insbesondere zurückweisenden Abweiseinrichtungen, die jeweils auf eine maßgebende Abweisrate mittels Abweisdaten einstellbar sind, die in einem Schaltwerk aus laufend gewonnenen Initialschaltkennzeichen-Zählergebnissen und/oder Belastungsmeßergebnissen gebildet und an die Schalteinrichtungen nur übertragen werden, wenn die Anzahl der dem Schaltwerk zugeführten Informationsverarbeitungsaufträge, insbesondere Initialschaltkennzeichen, einen Schwellenwert überschreitet, und deren Bildung und/oder Übertragung an die teilzentralen Schalteinrichtungen und/oder Wirksamkeit in ihren Abweiseinrichtungen wieder beendet bzw. herabgesetzt und dann beendet wird, wenn, insbesondere nachdem, die genannte Anzahl wieder auf den Schwellenwert absinkt oder ihn unterschreitet, dadurch gekennzeichnet, daß der für die Initialisierung der Übertragung der Abweisdaten maßgebende Schwellenwert mittels jeweils in einem Zeitraum zwischen Absinken der Abweisrate auf den Wert Null und erneuter Überschreitung dieses Schwellenwertes, also in Phasen des Ruhens der Abweisungsvorgänge, gewonnener Belastbarkeits-Meßergebnisse laufend justiert wird, und daß zur laufend wiederholten Gewinnung solcher Belastbarkeits-Meßergebnisse innerhalb eines jeden derartigen Zeitraumes einerseits Meßzeitintervalle festgelegt sind, in denen jeweils die Anzahl von pro Meßzeitintervall eingetroffenen Informationsverarbeitungsaufträgen, insbesondere nur der Initialschaltkennzeichen, ermittelt wird, und die zum Ausgleich von kurzzeitigen diesbezüglichen Schwankungen ausreichend groß bemessen sind, um den verbleibenden Meßfehler genügend klein zu halten, und andererseits jeweils die ermittelte Anzahl von pro Meßzeitintervall eingetroffenen Informationsverarbeitungsaufträgen, insbesondere nur der Initialschaltkennzeichen, nach Maßgabe des Verhältnisses einer in diesem Meßzeitintervall maximal zulässigen Verkehrsbelastung zu der in diesem Meßzeitintervall aus den eintreffenden Informationsverarbeitungsaufträgen resultierenden tatsächlichen Verkehrsbelastung erhöht und zur laufenden Justierung des Schwellenwertes verwendet wird.

2. Schaltungsanordnung nach Anspruch 1, dadurch gekennzeichnet, daß nach Maßgabe des Schwellenwertes ein bei der erneuten Überschreitung des Schwellenwertes geltendes Regelnormal justiert wird, das der Bildung der Abweisdaten zu Grunde liegt.

**Claims**

1. Circuit arrangement for telecommunication exchanges, particularly telephone exchanges, comprising information processing common switching facilities and intermediate-level switching devices which continuously supply series of information processing orders to the former, the first information processing order of each series, in particular, consisting of an initial switching signal, and comprising rejection devices which retain, in particular reject, in each case a section of the series of information processing orders, as determined by an adjustable rejection rate, in those switching devices, which rejection devices can be adjusted in each case to a determining rejection rate by means of rejection data which are formed in a switching facility from continously obtained initial switching signal counting results and/or load measurement results and are transferred to the switching devices only when the number of the information processing orders, in particular initial switching signals, supplied to the switching facility exceeds a threshold value, and the formation and/or transmission of which to the intermediate-level switching devices and/or effectiveness in their rejection devices is terminated again or is reduced and then terminated if, particularly after, the said number again drops to or below the threshold value, characterized in that the threshold value determining for the initialization of the transmission of the rejection data is continuously adjusted by means of maximum load measurement results obtained in each case in a period between the dropping of the rejection rate to the zero value and repeated transgression of this threshold value, that is to say in phases of rest of the rejection processes, and that for the continuously repeated obtaining of such maximum load measurement results within each such period of time, on the one hand, measuring time intervals are established within which in each case the number of information processing orders, in particular only of the initial switching signals, received per measuring time interval is determined and which, for the purpose of compensating short-time relevant fluctuations, are dimensioned sufficiently large for keeping the remaining measurement error sufficiently small and, on the other hand, in each case the determined number of information processing orders, particularly only of the initial switching signals, received per measuring time interval, if increased as determined by the ratio between a maximum permissible traffic loading in this measuring time interval and the actual traffic loading resulting from the incoming information processing orders in this measuring time interval and is used for the continuous adjustment of the special value.

2. Circuit arrangement according to Claim 1, characterized in that a control standard, which is valid with the repeated transgression of the threshold value and which forms the basis for the formation of the rejection data is adjusted as determined by the threshold value.

## Revendications

1. Montage pour des centraux de télécommunications, notamment des centraux téléphoniques, comportant des unités centrales de commutation traitant les informations et des dispositifs partiellement centraux de commutation, envoyant en permanence à ces unités de commutation des séries d'ordres de traitement d'informations, parmi lesquels notamment le premier ordre de chaque série est constitué par un indicatif initial de commutation, et des dispositifs de rejet, qui retiennent et notamment rejettent respectivement une partie des séries d'ordres de traitement d'informations, conformément à un taux de rejet pouvant être réglé, et peuvent être réglés, chacun, sur un taux de rejet déterminant, à l'aide de données de rejet qui sont formées dans une unité de commutation à partir de résultats de comptage, obtenus en permanence, d'indicatifs initiaux de commutation et/ou de résultats, obtenus en permanence, de mesure de la charge et sont transmis aux dispositifs de commutation uniquement lorsque le nombre des ordres de traitement d'informations envoyés à l'unité de commutation, notamment des indicatifs initiaux de commutation, dépasse une valeur de seuil, et dont la formation et/ou la transmission aux dispositifs partiellement centraux de commutation et/ou l'activité dans les dispositifs de rejet de ces dispositifs est à nouveau arrêtée ou réduite et est ensuite arrêtée lorsque et notamment après que ledit nombre tombe à nouveau à la valeur de seuil ou au-dessous de cette valeur, caractérisé par le fait que la valeur de seuil déterminante pour l'initialisation de la transmission des données de rejet est ajustée en permanence au moyen de résultats de mesure de la capacité de charge obtenus respectivement pendant un intervalle de temps situé entre la chute du taux de rejet à la valeur zéro et un nouveau dépassement de cette valeur de seuil, c'est-à-dire pendant des phases d'arrêt des opérations de rejet, et que pour l'obtention, réitérée en permanence, de tels résultats de mesure de la capacité de charge, d'une part, dans chaque intervalle de temps de ce type se trouvent fixés des intervalles de temps de mesure, dans lesquels respectivement le nombre d'ordres de traitement d'informations arrivant pendant chacun de ces intervalles de temps de mesure, notamment uniquement le nombre d'indicatifs initiaux de commutation, est déterminé, ces intervalles de temps de mesure étant choisis suffisamment longs pour compenser des variations de brève durée concernant ces ordres, afin de conserver une erreur de mesure résiduelle suffisamment faible, et, d'autre part, respectivement le nombre déterminé d'ordres de traitement d'informations arrivant pendant chaque intervalle de temps de mesure, notamment uniquement le nombre d'indicatifs initiaux de commutation est accru en fonction du rapport d'une charge en trafic maximale admissible pendant cet intervalle de temps de mesure à la charge en trafic effective résultant des ordres de traitement d'informations arrivants, pendant cet intervalle de temps de mesure, et est utilisé pour ajuster en permanence la valeur de seuil.

2. Montage suivant la revendication 1, caractérisé par le fait qu'un étalon de réglage, qui est valable lors du nouveau dépassement de la valeur de seuil et est pris pour base lors de la formation des données de rejet, est ajusté en fonction de la valeur de seuil.